# EUROPEAN PATENT SPECIFICATION

(11) **EP 2 984 472 B1**
(45) Date of publication and mention of the grant of the patent: **05.06.2019**
(21) Application number: 14836675.0
(22) Date of filing: 08.04.2014
(51) Int. Cl.: C23C 4/18, C23C 4/073, C23C 28/00, F01D 5/18, F01D 5/28, F01D 21/00, G01J 5/48, G01N 21/88, G01N 21/95

(54) **METHOD FOR DETECTING A COMPROMISED COMPONENT**
VERFAHREN ZUR ERKENNUNG EINER BESCHÄDIGTEN KOMPONENTE
PROCÉDÉ DE DÉTECTION DE COMPOSANT COMPROMIS

(30) Priority: 08.04.2013 US 201361809611 P
(43) Date of publication of application: 17.02.2016
(73) Proprietor: United Technologies Corporation, Farmington, CT 06032 (US)
(72) Inventor: GREENBERG, Michael, D., Bloomfield, CT 06002 (US); ZELESKY, Mark, F., Bolton, CT 06043 (US)
(74) Representative: Dehns
(86) International application number: PCT/US2014/033341
(87) International publication number: WO 2015/023322

(56) References cited:
- EP-A1- 1 657 536
- EP-A1- 1 688 723
- US-A- 5 173 929
- US-A- 5 419 971
- US-A- 5 900 278
- US-A1- 2004 263 837
- US-A1- 2005 199 832
- US-A1- 2005 235 493
- US-A1- 2012 084 981
- US-B1- 7 918 141

## Description

### TECHNICAL FIELD OF THE DISCLOSURE

The present disclosure is generally related to a method for determining if a turbine blade component in a turbine engine having a coating thereon has been compromised.

### BACKGROUND OF THE DISCLOSURE

Turbine engines generally include fan, compressor, combustor and turbine sections positioned along an axial centerline sometimes referred to as the engine's "axis of rotation". The fan, compressor, and combustor sections add work to air (also referred to as "core gas") flowing through the engine. The turbine extracts work from the combusted core gas to drive the fan and compressor sections. The fan, compressor, and turbine sections each include a series of stator and rotor assemblies. The stator assemblies, which do not rotate (but may have variable pitch vanes), increase the efficiency of the engine by guiding core gas flow into or out of the rotor assemblies.

Each rotor assembly typically includes a plurality of blades extending out from the circumference of a disk, or may comprise a unitary structure of disks and blades. One or more turbine stages downstream of the combustor and are therefore subjected to highly elevated temperatures during normal operation of the turbine engine. For example, it is not uncommon for the combustion gasses coming out of the combustor to significantly exceed 2000 degrees Fahrenheit. To withstand such temperatures, many turbine engines employ cooling passages within the airfoils and other components located in the turbine, wherein cooler gases are routed to the internal cooling passages (which typically exit through an opening in the surface of the component) in order to reduce the metal temperature of the components. Subsequent loss of cooling due to contamination (obstructing the cooling passage), cooling air system delivery malfunction, or other failure modes can result in overheating of the blades and other components subjected to elevated temperatures, causing reduced life.

A significant amount of labor is required to disassemble the engine to inspect these cooling passages for contamination. Intermittent loss of cooling may be more difficult to detect, such as that resulting from an intermittent valve failure. Improvements are therefore needed in the ability to diagnose when turbine components such as airfoils are subjected to excess temperatures during operation in order to ensure reliable operation.

US 2005/235493 A1, EP 1657536 A1 and US 5419971 A may be useful in understanding the background of the present disclosure.

### SUMMARY OF THE DISCLOSURE

The present invention provides a method for determining if a component having a coating thereon has been compromised as defined in claim 1.

Other embodiments are also disclosed.

### BRIEF DESCRIPTION OF THE DRAWINGS

FIG. 1 is a schematic cross-sectional view of a gas turbine engine.
FIG. 2 is an elevational view of a high pressure turbine blade in a gas turbine engine in an embodiment.
FIG. 3 is a cross-sectional view of the blade of FIG. 2.
FIG. 4 is an elevational view of a high pressure turbine blade in a gas turbine engine in an embodiment.
FIG. 5 is a cross-sectional view of the blade of FIG. 4.
FIG. 6 is an elevational view of a high pressure turbine blade in a gas turbine engine in an embodiment.
FIG. 7 is a first cross-sectional view of the blade of FIG. 6.
FIG. 8 is a second cross-sectional view of the blade of FIG. 6.
FIG. 9 is a close-up view of a portion of the blade of FIG. 6.
FIG. 10 is a partial perspective view of a first stage high pressure turbine blade with a coating applied thereto in a pattern according to an embodiment, wherein visibility of the pattern as viewed through a borescope indicates exceeding a predetermined temperature.

### DETAILED DESCRIPTION OF THE DISCLOSED EMBODIMENTS

Reference will now be made to certain embodiments and specific language will be used to describe the same.

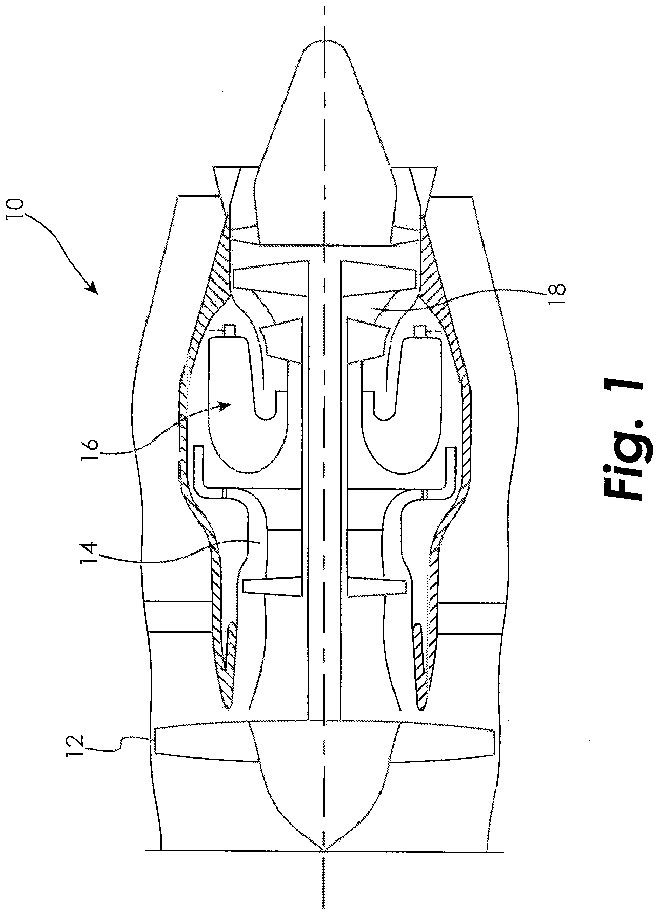

FIG. 1 illustrates a gas turbine engine 10 of a type normally provided for use in a subsonic flight, generally comprising in serial flow communication a fan 12 through which ambient air is propelled, a compressor section 14 for pressurizing a portion of the air (the gas path air), a combustor 16 in which the compressed air is mixed with fuel and ignited for generating a stream of hot combustion gases, and a turbine section 18 for extracting energy from the combustion gases.

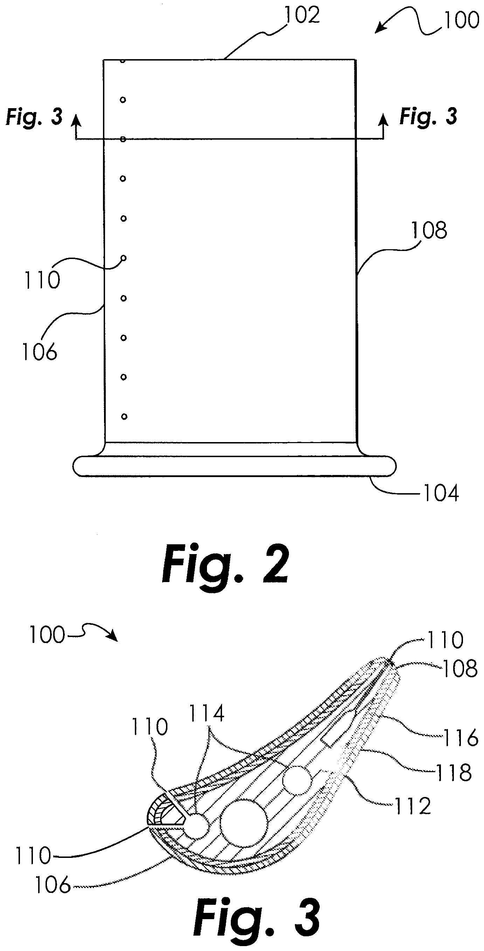

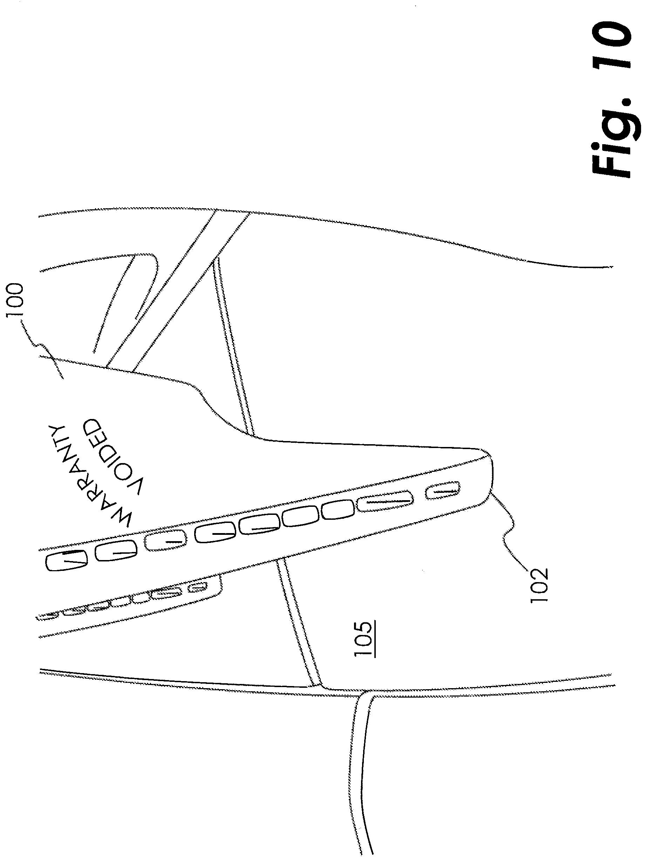

It has been determined by the present inventors that a coating may be employed to provide external borescope-inspectable indication of excessive metal temperatures (caused by plugged cooling passages or other causes). While described in the context of a blade airfoils, the disclosure also includes a vane, a seal or other components subjected to high temperatures. Referring to FIG. 2, there is shown a view of a high pressure turbine blade 100. As is known in the art, gases flowing through the turbine engine impact the blade 100, thereby causing rotation of the high pressure turbine rotor stage(s). The blade 100 includes a tip 102 designed to rub against a segmented blade outer air seal (BOAS 105, see FIG. 10), thereby providing a seal to prevent gases from flowing between the blade 100 and the blade outer air seal. The blade 100 is coupled to a rotor assembly of the turbine (not shown) at root 104, and receives the cooling gases into its cooling passages from the turbine rotor assembly. Both the leading edge 106 and trailing edge 108 and other surfaces of the blade may include a plurality of cooling holes 110 formed therein.

As mentioned hereinabove, the standard method for inspecting the blade 100 and its cooling passages involves opening the engine case and may include partially disassembling the engine. Some of the blades 100 must be destructively tested to determine the state of the cooling passages. It is common for this process to take several days for the inspection of each engine. Turbine engines are equipped with ports that allow a borescope to be used to make a visible inspection of various internal portions of the engine, including the turbine, as shown in FIG. 2. With normal inspection schedules within the engine, this allows for periodic inspection of the cooling passages. However, some OEM coating systems that are applied to the blades 100 provide no advanced warning of compromised cooling/metal temperatures of the blade 100.

The present inventors have determined that a coating can be used to detect when a component, that is the blade 100, has been subjected to elevated temperatures that may have compromised the component. The present disclosure also encompasses surfaces and components within a gas turbine engine and any area where it is desired to produce a visible indication that a surface or component has been subjected to a temperature that exceeds a given threshold.

A cross-sectional view of the blade 100 is shown in FIG. 3. As is visible in the cross-section, the blade 100 comprises a base alloy portion 112 that includes cooling channels 114. The base alloy portion 112 is coated with a metallic coating 116. In one embodiment, the metallic coating 116 may comprise NiCoCrAlY. In other embodiments, other coatings such as aluminides may be used. The coating exhibits a displaced appearance (as described herein) when exposed to temperatures above a predetermined temperature. A metallic coating 116 comprising NiCoCrAlY can be applied in any desired manner, including low pressure plasma spray, an air plasma spray or using high velocity oxy-fuel (HVOF) spraying, to name just three non-limiting examples. A thermal barrier coating 118 is applied to the blade 100 on top of the metallic coating 116. In some embodiments, the thermal barrier coating 118 comprises a stabilized zirconia, such as YSZ, GdZr or combinations of these coatings applied in layers. In other embodiments, other coatings may be used. Those skilled in the art will recognize from the present disclosure that the particular thermal barrier coating used is not critical to the presently disclosed embodiments. The thermal barrier coating 118 may be applied in any desired manner, and is applied in some embodiments using air plasma spray or electron beam physical vapor deposition (EB-PVD), to name just two non-limiting examples.

Thermal barrier coating 118 can spall during normal operation, or be eroded due to small particles in the gas path. Once the thermal barrier coating 118 is spalled or eroded, the metallic coating 116 will visibly rumple once it has been heated above a predetermined temperature, indicating metal substrate temperatures that have exceeded a predetermined limit. The rumpling process occurs when the metallic coating 116 is heated to a temperature near its melting temperature and starts to flow. Centrifugal forces acting on the rotating blade 100 will cause the metallic coating 116 to run toward the tip 102 of the blade 100. The thermal barrier coating 118 is applied as a thin coating and has a very high melting temperature. The thermal barrier coating 118 tends to spall off in chunks when its interface temperature has exceeded a design value. Once the thermal barrier coating 118 has spalled, the metallic coating 116 exhibits visibly detectable changes when it overheats, and these changes can be detected with a borescope inspection in order to determine that the part requires service.

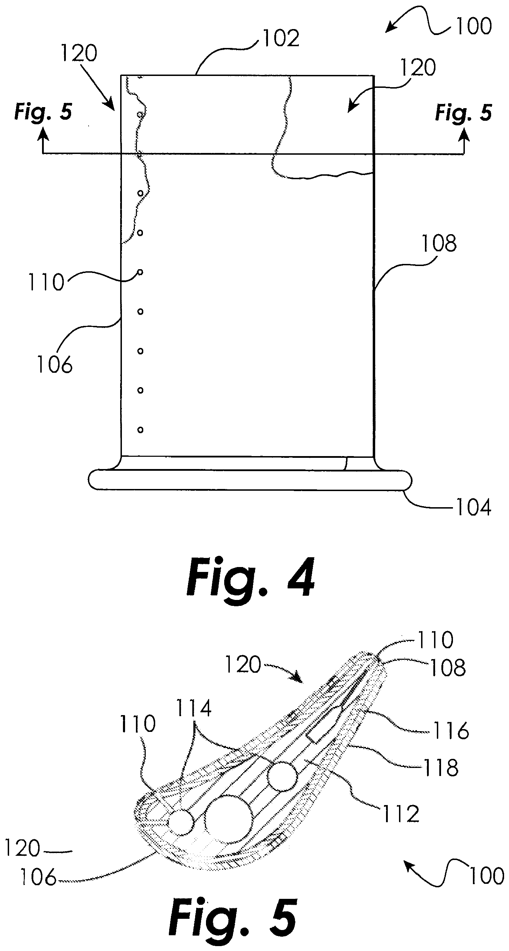

FIGs. 4 and 5 show, respectively, elevational and cross-sectional views of the blade 100 after it has been operated for a period of time. When exposed to high temperatures, but not temperatures that are above the predetermined temperature above which the blade 100 should be serviced, the thermal barrier coating 118 may exhibit a spalled appearance, as indicated at the areas 120. The spalled areas 120 may appear as discolored or have a different reflectivity (dull or shiny) when compared to other areas of the blade 100, but these areas are not "rumpled". A spalled thermal barrier coating 118 can result from operating for an extended time under normal operating conditions through particle erosion, or it is an indication that the thermal barrier coating 118 has been exposed to a temperature at or above its spallation point (causing failure of the mechanical or chemical bond between the thermal barrier coating 118 and the underlying metallic coating 116) and has spalled, resulting in pitting of the surface or larger areas where the thermal barrier coating 118 is partially or completely missing. The spalled areas 120 are typically not an indication that the blade 100 has seen excessive temperatures and this therefore is not an indication that the blade 100 should be serviced.

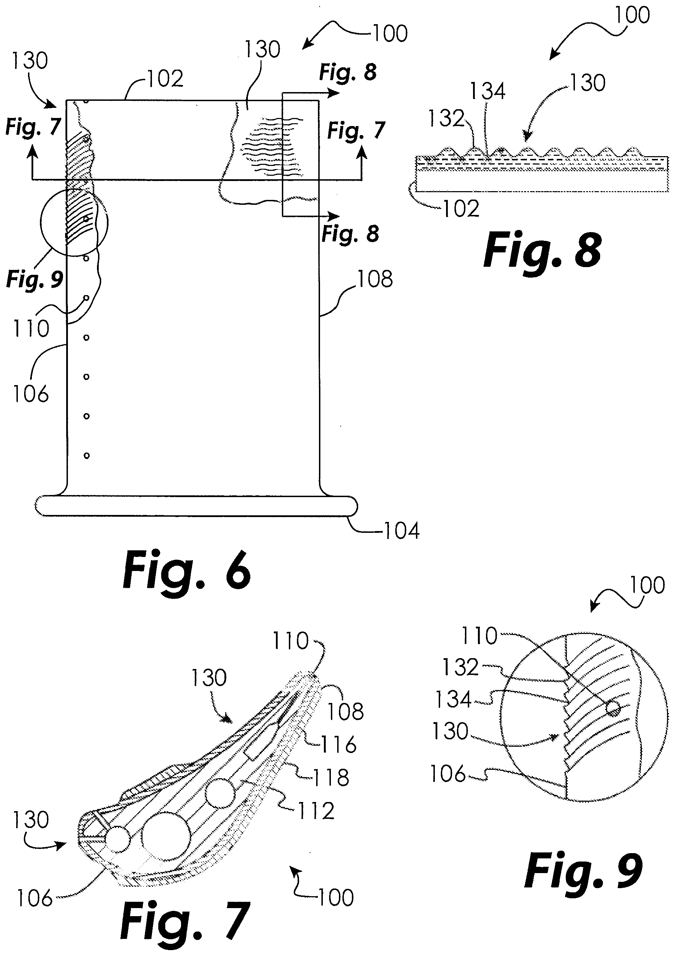

FIGs. 6 and 7 show, respectively, elevational and cross-sectional views of the blade 100 after it has been operated for a period of time. When exposed to high temperatures above the predetermined temperature above which the blade 100 should be serviced, the metallic coating 116 will exhibit a displaced appearance (a rumpled appearance or other evidence of having flowed), as indicated at the areas 130. A displaced metallic coating 116 is an indication that the metallic coating 116 has been exposed to a temperature near, at or above its melting point and has flowed. As used herein, the term "displaced" is intended to encompass a metallic coating 116 that is rumpled or otherwise exhibits evidence of having flowed.

FIG. 8 is a cross-sectional view of a rumpled portion of area 130. As can be seen, the metallic coating 116 has rumpled and solidified, leaving the surface formed into a series of peaks 132 and valleys 134. FIG. 9 is a close-up view of a portion of the area 130 at leading edge 106, more clearly showing the rumpled portion exhibiting a series of peaks 132 and valleys 134. The coating has also flowed into the cooling hole 110 and partially obstructed the cooling hole 110. As used herein, the term "displaced" is also intended to encompass a metallic coating 116 that has flowed into a cooling hole 110.

The use of the thermal barrier coating 118 and metallic coating 116 in combination with a schedule of borescope visual inspection can dramatically improve the ability to detect failed cooling passages in the turbine blades 100. As described hereinabove, the standard inspection method of opening the engine case and partially disassembling the engine is typically performed once for every three years of operation of the engine. When the thermal barrier coating 118, metallic coating 116, and the presently disclosed displaced coating detection methods are used, relatively non-invasive borescope inspections can provide yearly (or other desired schedule) detection of compromised cooling passages.

The metallic coating 116 is applied as a base coating under a thermal barrier coating and is applied in a pattern of letters forming a message. The metallic coating 116 does not have to be applied to the entire surface, but can in some embodiments be applied to only a portion of the surface to be inspected. In some embodiments, a second layer of the metallic coating 116 is applied to a surface (such as by stenciling, to give just one non-limiting example), or a thin amount is removed from the primary layer of metallic coating 116 in some areas to leave a positive, to form a pattern of letters forming a message. For example, if the metallic coating 116 is applied to a surface in a pattern that spells out "WARRANTY VOIDED", a visual indication may be provided that the surface was operated at an elevated temperature that is sufficient to void the warranty of the engine, as illustrated in FIG. 10.

The metallic coating 116 may also be used to diagnose a profile problem in the output of a turbine engine combustor. The output of the combustor is nominally pointed toward the center of the exhaust flow passage. If the combustor output is skewed toward the inside diameter of the flow passage, increased heat will be generated at the junction of the blade 100 and the rotor. The weight of the blade 100 and the centrifugal forces applied to it during operation of the engine can potentially cause the blade 100 to detach from the rotor due to the compromised metal at the blade/rotor junction. Similarly, if the combustor output is skewed toward the outside diameter of the flow passage, increased heat will be generated at the tip 102 of the blade 100 and the weakened structure at the tip 102 may not be able to support itself and may break off. Inspection of metallic coating 116 applied to the static vanes and/or the flow passage near the combustor output can provide a visual indication of where there may be a problem with the alignment of the combustor output.

## Claims

1. A method for determining if a turbine blade component in a turbine engine having a coating thereon has been compromised, the method comprising the steps of:
a) applying the coating to the component;
b) visually inspecting the coating; and
c) determining that the component has been operated above the predetermined temperature if the coating is displaced,
**characterized in that**:
the displaced coating is indicative of one or more plugged cooling passages of the component,
wherein the coating comprises:
a metallic coating layer; and
a thermal barrier coating applied over the metallic layer,
wherein the metallic coating layer is applied in a pattern of letters forming a message, and wherein visual indication of the message as viewed via borescope visual inspection of the component is indicative of the exceeding of a predetermined temperature.

2. The method of claim 1, wherein the component comprises a high pressure turbine blade in a turbine engine.

3. The method of claim 1 or 2, further comprising the step of:
d) determining that the component should be serviced if it is determined at step (c) that the component has been compromised.

4. The method of any preceding claim, wherein the displaced coating is rumpled, or wherein the displaced coating exhibits evidence of having flowed, or wherein the component includes at least one cooling hole formed therein and the displaced coating has flowed into at least one of the at least one cooling holes.

5. The method of any preceding claim, wherein the message comprises "WARRANTY VOIDED".

6. The method of any preceding claim, wherein the applying step further comprises: applying the coating in multiple layers.

7. The method of any preceding claim, wherein the metallic coating comprises NiCoCrAlY.

8. The method of any preceding claim, wherein the metallic coating comprises more than one layer.

## Patentansprüche

1. Verfahren zum Feststellen, ob eine Turbinenschaufelkomponente in einem Turbinentriebwerk, die eine Beschichtung darauf aufweist, beschädigt wurde, wobei das Verfahren die folgenden Schritte umfasst:
a) Aufbringen der Beschichtung auf die Komponente;
b) Durchführen einer Sichtprüfung der Beschichtung; und
c) Feststellen, dass die Komponente über der vorgegebenen Temperatur betrieben wurde, wenn die Beschichtung verschoben ist,
**dadurch gekennzeichnet, dass**:
die verschobene Beschichtung auf einen oder mehrere verstopfte Kühlkanäle der Komponente hinweist,
wobei die Beschichtung Folgendes umfasst:
eine metallische Beschichtungsschicht; und
eine Wärmedämmschicht, die über der metallischen Schicht aufgebracht ist,
wobei die metallische Schicht in einem Muster aus Buchstaben aufgebracht ist, das eine Nachricht bildet, und wobei die Sichtprüfung der Nachricht bei Ansicht mittels einer Endoskop-Sichtprüfung der Komponente das Überschreiten einer vorgegebenen Temperatur anzeigt.

2. Verfahren nach Anspruch 1, wobei die Komponente eine Hochdruckturbinenschaufel in einem Turbinentriebwerk umfasst.

3. Verfahren nach Anspruch 1 oder 2, ferner umfassend den folgenden Schritt:
d) Feststellen, dass die Komponente gewartet werden muss, falls in Schritt (c) festgestellt wurde, dass die Komponente beschädigt wurde.

4. Verfahren nach einem der vorstehenden Ansprüche, wobei die verschobene Beschichtung gefältelt ist, oder wobei die verschobene Beschichtung Anzeichen dafür zeigt, dass sie verlaufen ist, oder wobei die Komponente mindestens ein Kühlloch, das darin ausgebildet ist, umfasst und die verschobene Beschichtung in mindestens eines dieser Kühllöcher gelaufen ist.

5. Verfahren nach einem der vorstehenden Ansprüche, wobei die Nachricht "WARRANTY VOIDED" (GARANTIE ERLOSCHEN) umfasst.

6. Verfahren nach einem der vorstehenden Ansprüche, wobei der Schritt des Aufbringens ferner Folgendes umfasst:
Aufbringen der Beschichtung in mehreren Schichten.

7. Verfahren nach einem der vorstehenden Ansprüche, wobei die metallische Beschichtung NiCoCrAlY umfasst.

8. Verfahren nach einem der vorstehenden Ansprüche, wobei die metallische Beschichtung mehr als eine Schicht umfasst.

## Revendications

1. Procédé pour déterminer si un composant d'aube de turbine dans un turbomoteur ayant un revêtement sur celui-ci a été compromis, le procédé comprenant les étapes consistant à :
a) appliquer le revêtement sur le composant ;
b) inspecter visuellement le revêtement ; et
c) déterminer que le composant a fonctionné au-dessus de la température prédéterminée si le revêtement est déplacé,
**caractérisé en ce que** :
le revêtement déplacé est indicatif d'un ou de plusieurs passages de refroidissement colmatés du composant,
dans lequel le revêtement comprend :
une couche de revêtement métallique ; et
un revêtement barrière thermique appliqué sur la couche métallique,
dans lequel la couche de revêtement métallique est appliquée selon un motif de lettres formant un message, et dans lequel une indication visuelle du message telle que vue par une inspection visuelle par endoscope du composant est indicative du dépassement d'une température prédéterminée.

2. Procédé selon la revendication 1, dans lequel le composant comprend une aube de turbine à haute pression dans un turbomoteur.

3. Procédé selon la revendication 1 ou 2, comprenant en outre l'étape consistant à :
d) déterminer que le composant doit être réparé s'il est déterminé à l'étape (c) que le composant a été compromis.

4. Procédé selon une quelconque revendication précédente, dans lequel le revêtement déplacé est froissé, ou dans lequel le revêtement déplacé présente des traces évidentes de coulée, ou dans lequel le composant comprend au moins un trou de refroidissement formé dans celui-ci et le revêtement déplacé a coulé dans au moins l'un desdits au moins un trou de refroidissement.

5. Procédé selon une quelconque revendication précédente, dans lequel le message comprend "WARRANTY VOIDED".

6. Procédé selon une quelconque revendication précédente, dans lequel l'étape d'application consiste en outre à : appliquer le revêtement en plusieurs couches.

7. Procédé selon une quelconque revendication précédente, dans lequel le revêtement métallique comprend du NiCoCrAlY.

8. Procédé selon une quelconque revendication précédente, dans lequel le revêtement métallique comprend plus d'une couche.
